# EUROPEAN PATENT SPECIFICATION

(11) **EP 1 893 902 B1**
(45) Date of publication and mention of the grant of the patent: **18.01.2017**
(21) Application number: 06763844.5
(22) Date of filing: 22.06.2006
(51) Int. Cl.: F16L 9/18, F16L 39/00, B64D 37/00

(54) **PIPELINE AND METHOD FOR MANUFACTURING THAT PIPELINE**
ROHRLEITUNG UND DAS VERFAHREN ZU DEREN HERSTELLUNG
CONDUITE ET SON PROCEDE DE FABRICATION

(30) Priority: 22.06.2005 DE 102005028766
(43) Date of publication of application: 05.03.2008
(73) Proprietor: Airbus Operations GmbH, 21129 Hamburg (DE)
(72) Inventor: BECKS, Ralf, 21614 Buxtehude (DE); DEHARDE, Joachim, 24632 Lentföhrden (DE)
(74) Representative: Isarpatent
(86) International application number: PCT/EP2006/063451
(87) International publication number: WO 2006/136597

(56) References cited:
- WO-A-02/04198
- WO-A1-01/07227
- GB-A- 2 331 348
- US-A- 4 248 062
- US-A- 5 497 809
- US-A1- 2002 106 483

## Description

The present invention concerns a pipeline, in particular a pipeline for fuel systems in aircraft, comprising an inner pipe and an outer pipe surrounding that inner pipe.

Furthermore, the present invention concerns a method for manufacturing a pipeline, in particular a pipeline for fuel systems in aircraft, comprising an inner pipe and an outer pipe surrounding that inner pipe.

In aircraft, in particular in modern passenger aircraft, the tip of the stern typically contains an additional, turbine-powered auxiliary power unit for supplying power to electrical and air-powered devices, such as the air conditioning, the lighting and the overall electrical system of the plane.

Furthermore, a so-called trimming tank is ordinarily placed in the horizontal stabilizer. The trimming tank serves in particular to optimize the horizontal flight attitude of the plane, but it also has the auxiliary function of serving as an additional fuel tank to increase the range of the aircraft. The orientation of the plane with respect to the horizontal direction is accomplished by pumping fuel to and fro between the main tanks, which are ordinarily disposed in the wings of the aircraft, and the trimming tank. Additionally, fuel also has to be supplied to the auxiliary power unit from the main tanks.

The trimming tank and the auxiliary power unit are connected with the main tanks of the plane by at least one pipeline, which runs from the main tanks in the wings through the fuselage cell to the trimming tank in the horizontal stabilizer or the auxiliary power unit in the tip of the stern. It is also possible to provide two or more pipelines, which may be arranged in parallel.

In order to prevent uncontrolled leaking of fuel, the pipelines must be double-walled in accordance with the relevant security and aviation rules, in order to prevent accidents. Accidents are given for example by leakages in the fuel line. The gap in the double-walled pipeline is mainly for ventilation, for draining fuel that leaks uncontrollably as well as for shunting condensation water. By placing suitable sensors in the region of the gap, it is possible to detect the occurrence of fuel leaks, so that proper counter measures can be taken. The double-walled pipeline primarily offers protection against leakages, however not against serious mechanical damages from the outside, which may be caused by bursting landing gear tires, breaking landing gear wheels, exploding turbines or the like.

Conventionally, such double-walled pipelines are preferably made of stainless steel and/or aluminum. In particular to reduce weight, titanium is increasingly used in newer types of aircraft to manufacture double-walled pipelines. The inner pipe and the outer pipe as well as the connection flanges that are disposed at the ends of the pipeline portions are preferably made of metal, in order to ensure good weldability.

Since there is less and less room for assembly as well as due to the minimum distances that need to be kept to other technical devices, it is often necessary to lay out the above-described pipelines for supplying fuel to the trimming tank and to the auxiliary power unit, at least in portions, in a curved manner. However, curved, double-walled pipeline portions, in particular made of titanium or aluminum, can only be manufactured at high cost, since titanium as well as aluminum can only be welded in an inert gas atmosphere in a welding chamber.

The inner pipe for forming the double-walled pipeline can be bent comparatively easily and thus adjusted to the structurally required curvature radii. At least in the curved pipeline portions (and depending on the curvature radius and the size of the distance between the inner pipe and the outer pipe), the outer pipe to be disposed around the inner pipe can be slid only within a limited length over the inner pipe without becoming stuck, so that in order to form a longer curved double-walled pipeline portion, a plurality of curved outer pipeline portions have to be welded together. Due to the limited size of welding chambers and the limited manageability of larger curved pipeline portions in the welding chamber, it is therefore only possible to manufacture comparatively short curved double-walled pipeline portions for example of titanium.

These comparatively short curved pipeline portions in turn need to be connected to each other by flange joints, which increase the weight, in order to form longer pipelines or pipeline portions. On the one hand, the comparatively large number of additional flange joints leads to higher maintenance costs, since the leak tightness of the flange joints has to be monitored constantly. On the other hand, also the weight of the entire pipeline increases due to the flange joints.

A double-walled pipe assembly for a petroleum forecourt installation having a structure corresponding to the preamble of claim 1 is described in patent publication GB 2 331 348 A. Patent publication US 5 497 809 A describes a double-walled pipe comprising coaxial aluminium tubes in a tubing system suitable for a fuel line. Patent publication WO 01/07227 A1 describes a hollow-body fabrication technique deemed closest prior art to the inventive method.

It is an object of the present invention to provide a pipeline for fuel systems in aircraft that is double-walled and thus in accordance with all relevant security standards of international aviation authorities, that includes fewer maintenance-intensive and weight-increasing flange joints even in the case of a plurality of long curved portions to be laid out, and that is moreover easy to manufacture.

This object is solved by a pipeline as recited in claim 1 and a method of manufacturing a pipeline as recited in claim 8.

Due to the fact that the inner pipe is made of a metal material and/or at least in portions of a synthetic material and that the outer pipe is made of a fibre-reinforced thermosetting synthetic material at least in curved portions of the pipeline, the manufacture of a pipeline in accordance with the invention in curved portions is simplified considerably by reducing the number of necessary welding joints. Furthermore, in particular in longer curved portions, an inventive pipeline can be manufactured substantially without flange joints, so that the total number of necessary flange joints is reduced considerably in comparison to known double-walled fuel pipelines made of titanium, which results in a significant weight reduction.

Furthermore, using a synthetic material to form the outer pipe in straight portions of the inventive pipeline as well makes it possible to save weight.

By using a synthetic material, at least in portions, also for the inner pipe, it is possible to reduce the weight even further. In this case, the synthetic material is preferably fire proof or refractory.

In a preferable embodiment of the inventive pipeline, at least one spacer is arranged between the inner pipe and the outer pipe. This embodiment ensures a precisely defined cavity or a constant spacing in radial direction between the inner pipe and the outer pipe. The spacers are preferably formed similar to snappable or snap-on cables ties, so that they can be used universally for inner pipes of different diameters and/or cross-sectional shapes and furthermore can be firmly placed on them. The spacers may, however, also have a structure that is different to this.

In accordance with a further preferable embodiment, the inner pipe and the outer pipe have a substantially annular cross-sectional shape. This ensures that the pipeline has high mechanical stability and moreover is easy to manufacture.

In accordance with a further preferable embodiment of the inventive pipeline, the inner pipe is arranged substantially coaxially within the outer pipe. This leads to advantageous flow conditions within the cavity formed between the inner pipe and the outer pipe.

In accordance with a further preferable embodiment of the pipeline, the inner pipe is made of aluminum, stainless steel or titanium. In particular, an inner pipe made of titanium ensures very high mechanical rigidity while having a low weight.

In accordance with a further preferable embodiment, the synthetic material constituting the outer pipe is a fiber-reinforced thermosetting synthetic material, in particular a carbon-fiber-reinforced epoxy resin. The outer pipe is preferably made of a carbon-fiber-reinforced epoxy resin, in particular a so-called "prepreg material". A prepreg material is a fabric, fiber laminate or the like, which already has been impregnated with an epoxy resin, polyester resin or a phenolic resin. The prepreg material is stored in a cool environment in order to avoid curing. The final curing of the prepreg material is carried out after shaping in an autoclave, which ensures an optimal pressure and temperature curve during the curing process. Alternatively, the fiber reinforcement of the synthetic material may also be accomplished with glass fibers, aramid fibers or other mechanically strong fibers.

In accordance with a further preferable embodiment of the invention, the inner pipe is made, at least in portions, of a fiber-reinforced thermosetting synthetic material, in particular a refractory carbon-fiber-reinforced epoxy resin. By using, at least in portions, such a synthetic material for the inner pipe, a further weight reduction becomes possible. In this case, a fire-resistant or refractory carbon-fiber-reinforced epoxy resin material is used for the inner pipe.

An inventive method for manufacturing a pipeline comprising an inner pipe and an outer pipe surrounding the inner pipe includes the following steps:
- providing an inner pipe made of a metal material and/or, at least in portions, of a synthetic material for conveying fuel in the fuel system;
- arranging a supporting core on the inner pipe; and
- placing a fiber-reinforced thermosetting synthetic material on the supporting core in order to form an outer pipe surrounding the inner pipe on the supporting core,
whereby the outer pipe is spaced from the inner pipe so that a cavity or gap is formed between the inner pipe and the outer pipe to provide for drainage or flow in the pipeline outside the inner pipe.

In accordance with the inventive method, it is possible to manufacture the pipeline, in particular the curved portions of the pipeline, in an easy manner. Furthermore, using a fiber-reinforced synthetic material to form the outer pipe, not only makes it possible to form longer curved pipeline portions, but also leads to a considerable weight reduction.

In a preferred embodiment, the method comprises the step of attaching flange joints to both ends of the inner pipe as well as at least one spacer on the inner pipe. Only the placing of flange joints onto the ends of the inner pipe, which is preferably made of titanium, is carried out in a conventional manner within a welding chamber by thermowelding in an inert gas atmosphere. Alternatively, it is also possible to press on or screw on the flange joints. The formation of the outer pipe is performed in a simple manner by providing an easily shapeable and curable synthetic material, in particular a carbon-fiber-reinforced epoxy resin ("prepreg material") or the like, on a support core disposed on the inner pipe. After removing the support core and optional reworking, the pipeline manufactured in accordance with the inventive method is ready to be built in. Alternatively, it is also possible to use for example cured half-shells made of such a prepreg material as the support core, wherein the half-shells form the inner surface of the outer pipe after curing the synthetic material provided from the outside, and thus remain inside the pipeline.

It is also possible to make the inner pipe from a synthetic material. In this case, it is preferable to use a fire resistant or refractory carbon-fiber-reinforced epoxy resin material.

Further preferable embodiments of the inventive pipeline and the inventive method are specified in the other claims.
- Fig.1: shows a perspective view of an inventive pipeline.
- Fig. 2: shows a perspective view of the internal configuration of the pipeline shown in Fig. 1.
- Fig. 3: shows a longitudinal sectional view of an inventive pipeline.

Unless noted otherwise, like structural elements in the drawings are denoted by like reference numerals.

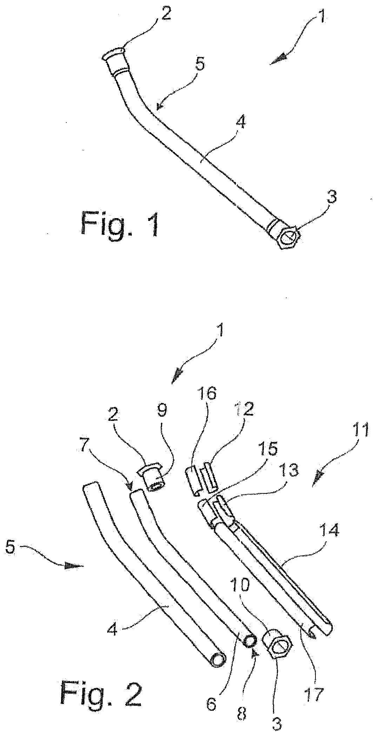

Fig. 1 shows a perspective view of an embodiment of an inventive pipeline 1 for a fuel system in an aircraft. The pipeline 1 is in particular for connecting the main tanks of the aircraft, which are disposed in the wings, with a trimming tank disposed in the horizontal stabilizer as well as with a turbine-powered auxiliary power unit for supplying power to the on-board electrical system and the air conditioning, the auxiliary power unit being disposed in the tip of the stern.

The pipeline 1 comprises flange joints 2 and 3 on both of its ends. The flange joints 2 and 3 are for connecting or joining the pipeline 1 with further pipelines or pipeline portions (not shown in the drawings) in order to form a longer pipeline. An outer pipe 4 surrounds an inner pipe (not shown in Fig. 1) preferably substantially coaxially. In accordance with the invention, the outer pipe 4 is made of a fiber-reinforced synthetic material, in particular a prepreg material of a carbon-fiber-reinforced epoxy resin. Alternatively, it is also possible to use glass fibers, aramid fibers or other mechanically strong fibers for the purpose of fiber reinforcement. The outer pipe 4 comprises a curved portion 5, which can be fabricated comparatively easily due to using an outer pipe 4 that is made of a fiber-reinforced synthetic material.

The pipeline 1 can have a geometric shape that is different from that shown in Fig. 1, and may have virtually any geometric shape.

The pipeline 1 can be regarded as part of a longer pipeline for a fuel system within an aircraft, which connects for example the wing tanks with a trimming tank and/or with a turbine-powered auxiliary power unit for the on-board electrical system. For this purpose a plurality of pipelines are connected by flange joints to a longer pipeline, which can have an overall very complex spatial configuration.

Fig. 2 is a perspective view of the internal configuration of the pipeline shown by way of example in Fig. 1, which comprises a support core that is used only for its manufacture. Referring to Fig. 2, the internal configuration of the pipeline as well as an inventive method for manufacturing it are described in the following.

The flange joints 2 and 3 are welded on at the inner pipe ends 7 and 8 of an inner pipe 6, which is bent in a curved portion 5. The outer pipe 4 is formed only after joining the flange joints 2 and 3 to the inner pipe 6. The inner pipe 6 is made of a metal material, such as aluminum, titanium or stainless steel. The inner pipe 6 and the outer pipe 4 each have a substantially circular cross-sectional shape. In order to ensure good weldability to the inner pipe 6, the flange joints 2 and 3 are preferably made of the same material as the inner pipe 6. In an alternative embodiment, in particular the outer pipe 4 may have a different geometric shape, such as an elliptic or oval cross-sectional shape, for example. In order to further reduce the weight, also the inner pipe 6 may be made of a synthetic material, in particular a fiber-reinforced thermosetting synthetic material. In this case the inner pipe is preferably made of a flame resistant or refractory carbon-fiber-reinforced epoxy resin material.

The outer pipe 4 surrounds the inner pipe 6 preferably coaxially, so that a cavity or gap is formed between the inner pipe 6 and the outer pipe 4. This double-walled configuration of the pipeline 1 has several functions. For example, in the event of a leakage of the inner pipe 6, it is possible to shunt fuel through the gap or cavity in a controlled manner to a drainage pipe, so that passengers are not endangered by fuel leakages in the area of the fuselage cell. Furthermore, it is possible to detect such leakages with sensors that are disposed in this gap.

In the region of the gap, the flange joints 2 and 3 comprise a plurality of passageways, in order to enable an unhindered flow of fuel. Furthermore, the flange joints 2 and 3 are provided with support surfaces for gaskets or sealings, wherein the gaskets or sealings also comprise cut-outs corresponding to the passageways. In order to attain a reliable and mechanically strong connection of the outer pipe 4 to the flange joints 2 and 3, the flange joints 2 and 3 each comprise a contact surface 9 or 10. The contact surfaces 9 and 10 can be provided with a primer, adhesive agent, at least partial roughening or the like in order to accomplish a better connection of the outer pipe 4.

In order to manufacture a pipeline in accordance with the inventive method, first, a sufficiently long pipe portion of a semi-finished pipe made of aluminum, titanium or stainless steel or the like is cut to a suitable length in order to form the inner pipe 6. The inner pipe 6 is preferably made of titanium. Subsequently, the inner pipe 6 may be provided with the geometric shape in accordance with the structural requirements by bending. In order to form inner pipes 6 of larger length, it is also possible to weld together several shorter pipe portions. The welding of the pipe portion is preferably performed after any bending that may be necessary. After this, the flange joints 2 and 3 are welded to both inner pipe ends 7 and 8 of the inner pipe 6 in a welding chamber by a conventional method under an inert gas atmosphere. Alternatively, the flange joints 2 and 3 may also be pressed on, welded on or fixed by any other method to the inner pipe ends 7 and 8. The flange joints 2 and 3 furthermore comprise the contact surfaces 9 and 10 for connection to the outer pipe 4, which is made of the fiber-reinforced synthetic material.

After the fabrication of the inner pipe 6 has been completed, spacers (not shown in figure 2) are placed on the inner pipe 6. Herein, it is preferable to place several spacers that are offset to each other with a certain spacing along the longitudinal direction of the inner pipe 6 around the circumference of the inner pipe 6. The spacers ensure that a predetermined spacing is kept between the inner pipe 6 and the outer pipe 4.

After this, a support core 11 is placed on the inner pipe 6. The areas of the contact surfaces 9 and 10, which are in particular for the connection of the outer pipe 4, stay free. In the embodiment shown in Fig. 2, the support core 11 is made of a total of six half shells 12 to 17 of a synthetic material that can be easily dissolved or removed chemically and/or thermally, such as Styrofoam™ or the like. The half shells 12 to 17 have an outer shape that makes it possible to place them snugly on the corresponding pipeline portions of the inner pipe 6. The wall thickness of the half shells 12 to 17 corresponds to the spacing to be provided between the inner pipe 6 and the outer pipe. In order to minimize manufacturing costs, the support core 11 is preferably made of a limited number of standardized half shells 12 to 17, so that the half shells 12 to 17 typically do not have to be adjusted individually to the respective geometric shape of the inner pipe 6.

To form the support core 11, it is possible to use synthetic materials that melt at low temperatures, wax-like substances such as waxes, forming sands or any other material that can be easily removed.

Subsequently, the outer pipe 4 on the support core 11 is made by wrapping a prefabricated fiber-reinforced epoxy resin material, in particular a prepreg material, which is finally cured. Herein, also the contact surfaces 9 and 10 for the connection to the outer pipe 4 are wrapped at the same time. Alternatively, it is also possible to wrap rovings of carbon fibers, glass fibers, aramid fibers or the like around the inner pipe 6, impregnating the rovings with a curable synthetic material, in particular with an epoxy resin or a polyester resin, and then curing them. Instead of the roving wrappings, it is also possible to use areal structures of carbon fibers, glass fibers, aramid fibers or the like, such as fabrics or laminates. Also a combination of rovings and areal structures can be used to form the fiber reinforcement of the outer pipe 4.

After the curing of the outer pipe 4, the support core 11 made of the half shells 12 to 17 of Styrofoam™, is removed, for example by rinsing with a chemical solvent that dissolves or decomposes the Styrofoam™. The half shells 12 to 17 can also be made of a different synthetic material, which can be removed by heating, for example. Alternatively, the half shells 12 to 17 may also be made of a different synthetic material that is not easily dissolved or removed chemically and/or thermally.

In an alternative method, the support core 11 may be made of half shells 12 to 17 of a fiber-reinforced epoxy resin. After wrapping the prepreg material around the support core 11 formed in this manner, the support core 11 itself then forms a part of the outer pipe 4, that is, the support core 11 is not removed after curing the prepreg material. The half shells 12 to 17 also may be made of a different synthetic material, however it is preferable to ensure that the synthetic material used to form the outer pipe 4 has good adhesiveness, since a support core 11 formed in this manner cannot be removed.

Instead of using the half shells 12 to 17, it is also possible to assemble the support core 11 from other geometric basic shapes. Furthermore, at least in portions, the support core 11 may have an outer shape that is not circular, for example in order to provide the outer pipe 4 with a square or rectangular outer shape. Accordingly, also the inner pipe 6 may have a cross-sectional shape that is not circular, in which case the inner surface of the support core 11 has to be adapted accordingly, in order to ensure that the support core 11 is supported over its entire area by the inner pipe 6.

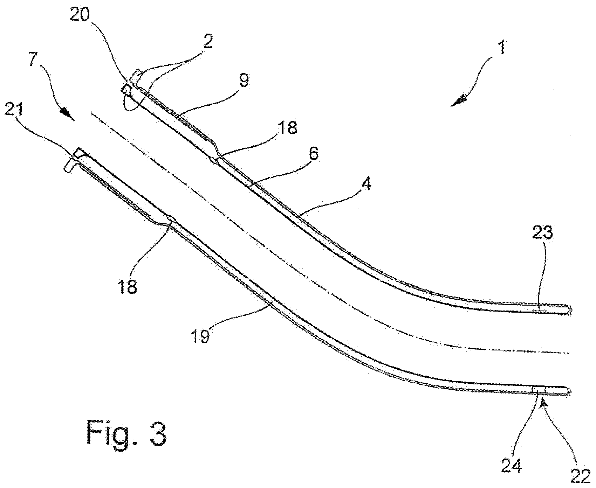

Fig. 3 shows a longitudinal section of an end portion of an inventive pipeline.

In the region of the end 7 of the inner pipe, the flange joint 2 is connected to the inner pipe 6 by a circumferential welding seam 18. The outer pipe 4 surrounds the inner pipe 6 substantially coaxially. The outer pipe 4 is connected firmly to the contact surface 9. The connection between the outer pipe 4 and the contact surface 9 is accomplished by adhering or gluing in the course of the wrapping of the prepreg material around the support core (which is not shown in Fig. 3). Due to the substantially coaxial arrangement, there is a spacing 19 between the inner pipe 6 and the outer pipe 4, which enables the controlled shunting of fuel in the case of damages or accidents. Furthermore, the flange joint 2 comprises a plurality of cut-outs 20 and 21, which enable the passing of fuel to a further pipeline (not shown in the drawings) that is connected to the flange joint 2. In order to make the spacing 19, if possible, substantially constant over the entire course of the pipeline 1, at least one spacer 22 is provided. The spacer 22 is made of a fixing strip 23, on one end of which a spacer piece 24 is placed. Similar to a cable tie, the fixing strip 23 can be introduced in a snappable manner into the spacer piece 24, so that the spacer 22 can be attached universally onto different inner pipes 6 of different diameters and/or cross-sectional shapes. For this purpose, the fixing strip 23 has a length that is slightly longer than the circumference of the inner pipe.

### List of reference numerals

- 1: pipeline
- 2: flange joint
- 3: flange joint
- 4: outer pipe
- 5: curved portion
- 6: inner pipe
- 7: inner pipe end
- 8: inner pipe end
- 9: contact surface
- 10: contact surface
- 11: support core
- 12: half shell
- 13: half shell
- 14: half shell
- 15: half shell
- 16: half shell
- 17: half shell
- 18: welding seam
- 19: spacing
- 20: cut-out
- 21: cut-out
- 22: spacer
- 23: fixing strip
- 24: spacer piece

## Claims

1. A pipeline (1) for a fuel system in an aircraft, comprising an inner pipe (6) for conveying fuel in the fuel system and an outer pipe (4) surrounding the inner pipe (6), wherein the outer pipe (4) is spaced from the inner pipe (6) so that a cavity or gap is formed between the inner pipe (6) and the outer pipe (4) to provide for drainage or flow in the pipeline (1) outside the inner pipe (6), wherein the inner pipe (6) is made of a metal material and/or, at least in portions, of a synthetic material, **characterized in that,** at least in curved portions (5) of the pipeline (1), the outer pipe (4) is made of a fiber-reinforced thermosetting synthetic material.

2. The pipeline (1) according to claim 1,
**characterized in that**
at least one spacer (22) is arranged between the inner pipe (6) and the outer pipe (4).

3. The pipeline (1) according to claim 1 or 2,
**characterized in that**
the inner pipe (6) and the outer pipe (4) have a substantially annular cross-sectional shape.

4. The pipeline (1) according to any of claims 1 to 3,
**characterized in that**
the outer pipe (4) is arranged substantially coaxially to the inner pipe (6).

5. The pipeline (1) according to any of claims 1 to 4,
**characterized in that**
the inner pipe (6) is made of aluminium, stainless steel or titanium.

6. The pipeline (1) according to any of claims 1 to 5,
**characterized in that**
the fiber-reinforced thermosetting synthetic material of the outer pipe (4) is a carbon-fiber-reinforced epoxy resin.

7. The pipeline (1) according to any of claims 1 to 6,
**characterized in that**
the inner pipe (6) is made, at least in portions, of a fiber-reinforced thermosetting synthetic material, in particular a refractory carbon-fiber-reinforced epoxy resin.

8. A method for manufacturing a pipeline (1) for a fuel system in an aircraft, the method comprising the following steps:
- providing an inner pipe (6) made of a metal material and/or, at least in portions, of a synthetic material for conveying fuel in the fuel system;
- arranging a supporting core (11) on the inner pipe (6); and
- placing a fiber-reinforced thermosetting synthetic material on the supporting core (11) to form an outer pipe (4) surrounding the inner pipe (6) ;
whereby the outer pipe (4) is spaced from the inner pipe (6) so that a cavity or gap is formed between the inner pipe (6) and the outer pipe (4) to provide for drainage or flow in the pipeline (1) outside the inner pipe (6).

9. The method according to claim 8, further comprising the step of:
- attaching flange joints (2, 3) to both ends (7, 8) of the inner pipe (6) as well as at least one spacer (22) on the inner pipe (6).

10. The method according to claim 9,
**characterized in that**
the flange joints (2, 3) are firmly connected to the inner pipe (6), and in particular are welded or pressed on the inner pipe (6).

11. The method according to any of claims 8 to 10,
**characterized in that**
the outer pipe (4) is made of a carbon-fiber-reinforced epoxy resin.

12. The method according to any of claims 8 to 11,
**characterized in that**
the inner pipe (6) is made of a fiber-reinforced thermosetting synthetic material, in particular of a refractory carbon-fiber-reinforced epoxy resin.

13. The method according to any of claims 8 to 12,
**characterized in that**
the supporting core (11) is made of half shells (12-17), wherein the half shells (12-17) are made of a synthetic material, in particular a synthetic material that can be easily dissolved chemically and/or thermally.

14. The method according to any of claims 8 to 12,
**characterized in that**
the supporting core (11) is made of half shells (12-17), wherein the half shells (12-17) are made of a fiber-reinforced thermosetting synthetic material, in particular carbon-fiber-reinforced epoxy resin.

15. The method according to any of claims 8 to 12,
**characterized in that**
the step of arranging the supporting core (11) on the inner pipe (6) comprises arranging a plurality of supporting core half shells (12-17) around the inner pipe (6), the half shells together having a geometry corresponding to a geometry of the outer pipe (4).

16. The method according to any of claims 8 to 12,
**characterized in that**
the step of forming the outer pipe (4) on the supporting core (11) comprises wrapping and/or curing the fibre-reinforced synthetic material around the supporting core (11).

17. The method according to any of claims 8 to 16, further comprising the step of:
- removing the support core (11) after forming the outer pipe (4) thereon, in particular by chemically and/or thermally dissolving the support core(11).

## Patentansprüche

1. Rohrleitung (1) für ein Treibstoffsystem in einem Flugzeug, die ein inneres Rohr (6) zum Transportieren von Treibstoff in dem Treibstoffsystem und ein äußeres Rohr (4), welches das innere Rohr (6) umgibt, umfasst, wobei das äußere Rohr (4) von dem inneren Rohr (6) so beabstandet ist, dass ein Hohlraum oder Spalt zwischen dem inneren Rohr (6) und dem äußeren Rohr (4) gebildet wird, um ein Abfließen oder Strömen in der Rohrleitung (1) außerhalb des inneren Rohres (6) zu ermöglichen, wobei das innere Rohr (6) aus einem Metallmaterial und/oder, mindestens abschnittsweise, einem synthetischen Material besteht, **dadurch gekennzeichnet, dass**, mindestens in gekrümmten Abschnitten (5) der Rohrleitung (1), das äußere Rohr (4) aus einem faserverstärkten duroplastischen synthetischen Material besteht.

2. Rohrleitung (1) nach Anspruch 1, **dadurch gekennzeichnet, dass** mindestens ein Abstandshalter (22) zwischen dem inneren Rohr (6) und dem äußeren Rohr (4) angeordnet ist.

3. Rohrleitung (1) nach Anspruch 1 oder 2, **dadurch gekennzeichnet, dass** das innere Rohr (6) und das äußere Rohr (4) einen im Wesentlichen kreisförmigen Querschnitt haben.

4. Rohrleitung (1) nach einem der Ansprüche 1 bis 3, **dadurch gekennzeichnet, dass** das äußere Rohr (4) im Wesentlichen koaxial zu dem inneren Rohr (6) angeordnet ist.

5. Rohrleitung (1) nach einem der Ansprüche 1 bis 4, **dadurch gekennzeichnet, dass** das innere Rohr (6) aus Aluminium, Edelstahl oder Titan besteht.

6. Rohrleitung (1) nach einem der Ansprüche 1 bis 5, **dadurch gekennzeichnet, dass** das faserverstärkte duroplastische synthetische Material des äußeren Rohres (4) ein kohlefaserverstärktes Epoxidharz ist.

7. Rohrleitung (1) nach einem der Ansprüche 1 bis 6, **dadurch gekennzeichnet, dass** das innere Rohr (6), mindestens abschnittsweise, aus einem faserverstärkten duroplastischen synthetischen Material besteht, insbesondere einem feuerfesten kohlefaserverstärkten Epoxidharz.

8. Verfahren zur Herstellung einer Rohrleitung (1) für ein Treibstoffsystem in einem Flugzeug, wobei das Verfahren die folgenden Schritte umfasst:
- Bereitstellen eines inneren Rohres (6), das aus einem Metallmaterial und/oder, mindestens abschnittsweise, einem synthetischen Material besteht, zum Transportieren von Treibstoff in dem Treibstoffsystem;
- Anordnen eines Stützkerns (11) an dem inneren Rohr (6); und
- Anordnen eines faserverstärkten duroplastischen synthetischen Materials auf dem Stützkerns (11) zum Bilden eines äußeren Rohres (4), welches das innere Rohr (6) umgibt;
wobei das äußere Rohr (4) von dem inneren Rohr (6) so beabstandet ist, dass ein Hohlraum oder Spalt zwischen dem inneren Rohr (6) und dem äußeren Rohr (4) gebildet wird, um das Abfließen oder Strömen in der Rohrleitung (1) außerhalb des inneren Rohres (6) zu ermöglichen.

9. Verfahren nach Anspruch 8, das des Weiteren folgenden Schritt umfasst:
- Anbringen von Flanschverbindungen (2, 3) an beiden Enden (7, 8) des inneren Rohres (6) sowie mindestens eines Abstandshalters (22) an dem inneren Rohr (6).

10. Verfahren nach Anspruch 9, **dadurch gekennzeichnet, dass** die Flanschverbindungen (2, 3) fest mit dem inneren Rohr (6) verbunden sind und insbesondere an das innere Rohr (6) geschweißt oder gepresst sind.

11. Verfahren nach einem der Ansprüche 8 bis 10, **dadurch gekennzeichnet, dass** das äußere Rohr (4) aus einem kohlefaserverstärkten Epoxidharz besteht.

12. Verfahren nach einem der Ansprüche 8 bis 11, **dadurch gekennzeichnet, dass** das innere Rohr (6) aus einem faserverstärkten duroplastischen synthetischen Material besteht, insbesondere einem feuerfesten kohlefaserverstärkten Epoxidharz.

13. Verfahren nach einem der Ansprüche 8 bis 12, **dadurch gekennzeichnet, dass** der Stützkern (11) aus Halbschalen (1217) besteht, wobei die Halbschalen (12-17) aus einem synthetischen Material bestehen, insbesondere einem synthetischen Material, dass auf einfache Weise chemisch und/oder thermisch aufgelöst werden kann.

14. Verfahren nach einem der Ansprüche 8 bis 12, **dadurch gekennzeichnet, dass** der Stützkern (11) aus Halbschalen (1217) besteht, wobei die Halbschalen (12-17) aus einem faserverstärkten duroplastischen synthetischen Material bestehen, insbesondere einem kohlefaserverstärkten Epoxidharz.

15. Verfahren nach einem der Ansprüche 8 bis 12, **dadurch gekennzeichnet, dass** der Schritt des Anordnens des Stützkerns (11) an dem inneren Rohr (6) das Anordnen mehrerer Stützkern-Halbschalen (12-17) um das innere Rohr (6) herum umfasst, wobei die Halbschalen zusammen eine Geometrie bilden, die einer Geometrie des äußeren Rohres (4) entspricht.

16. Verfahren nach einem der Ansprüche 8 bis 12, **dadurch gekennzeichnet, dass** der Schritt des Ausbildens des äußeren Rohres (4) an dem Stützkern (11) das Umhüllen und/oder das Aushärten des faserverstärkten synthetischen Materials um den Stützkern (11) herum umfasst.

17. Verfahren nach einem der Ansprüche 8 bis 16, das des Weiteren folgenden Schritt umfasst:
- Entfernen des Stützkerns (11) nach dem Ausbilden des äußeren Rohres (4) auf diesem, insbesondere durch chemisches und/oder thermisches Auflösen des Stützkerns (11).

## Revendications

1. Conduite (1) pour un circuit carburant dans un aéronef, comprenant un tuyau intérieur (6) pour transporter le carburant dans le circuit carburant et un tuyau extérieur (4) entourant le tuyau intérieur (6), dans lequel le tuyau extérieur (4) est espacé du tuyau intérieur (6) de sorte qu'une cavité ou un espace soit formé(e) entre le tuyau intérieur (6) et le tuyau extérieur (4) pour permettre l'évacuation ou l'écoulement dans la conduite (1) en dehors du tuyau intérieur (6), le tuyau intérieur (6) étant composé d'un matériau métallique et/ou, au moins dans des sections, d'un matériau synthétique, **caractérisée en ce que**, au moins dans des sections courbées (5) de la conduite (1), le tuyau extérieur (4) est composé d'un matériau synthétique thermodurcissable renforcé par des fibres.

2. Conduite (1) selon la revendication 1, **caractérisée en ce qu'**
au moins un moyen d'écartement (22) est agencé entre le tuyau intérieur (6) et le tuyau extérieur (4).

3. Conduite (1) selon la revendication 1 ou 2, **caractérisée en ce que**
le tuyau intérieur (6) et le tuyau extérieur (4) ont une forme en coupe transversale sensiblement annulaire.

4. Conduite (1) selon une quelconque des revendications 1 à 3, **caractérisée en ce que**
le tuyau extérieur (4) est agencé sensiblement coaxialement par rapport au tuyau intérieur (6).

5. Conduite (1) selon une quelconque des revendications 1 à 4, **caractérisée en ce que**
le tuyau intérieur (6) est composé d'aluminium, d'acier inoxydable ou de titane.

6. Conduite (1) selon une quelconque des revendications 1 à 5, **caractérisée en ce que**
le matériau synthétique thermodurcissable renforcé par des fibres du tuyau extérieur (4) est une résine époxy renforcée par des fibres de carbone.

7. Conduite (1) selon une quelconque des revendications 1 à 6, **caractérisée en ce que**
le tuyau intérieur (6) est composé, au moins dans des sections, d'un matériau synthétique thermodurcissable renforcé par des fibres, en particulier une résine époxy renforcée par des fibres de carbone réfractaire.

8. Procédé de fabrication d'une conduite (1) pour un circuit carburant dans un aéronef, le procédé comprenant les étapes suivantes :
- fournir un tuyau intérieur (6) composé d'un matériau métallique et/ou, au moins dans des sections, d'un matériau synthétique pour transporter le carburant dans le circuit carburant ;
- agencer une âme support (11) sur le tuyau intérieur (6) ; et
- placer un matériau synthétique thermodurcissable renforcé par des fibres sur l'âme support (11) afin de former un tuyau extérieur (4) entourant le tuyau intérieur (6) ;
- dans lequel le tuyau extérieur (4) est espacé du tuyau intérieur (6) de sorte qu'une cavité ou un espace soit formé(e) entre le tuyau intérieur (6) et le tuyau extérieur (4) pour permettre l'évacuation ou l'écoulement dans la conduite (1) en dehors du tuyau intérieur (6).

9. Procédé selon la revendication 8, comprenant en outre l'étape consistant à :
- attacher des joints à brides (2, 3) aux deux extrémités (7, 8) du tuyau intérieur (6) ainsi qu'au moins un moyen d'écartement (22) sur le tuyau intérieur (6).

10. Procédé selon la revendication 9, **caractérisé en ce que**
les joints à brides (2, 3) sont reliés de manière solidaire au tuyau intérieur (6), et sont en particulier soudés ou pressés sur le tuyau intérieur (6).

11. Procédé selon une quelconque des revendications 8 à 10, **caractérisé en ce que**
le tuyau extérieur (4) est composé d'une résine époxy renforcée par des fibres de carbone.

12. Procédé selon une quelconque des revendications 8 à 11, **caractérisé en ce que**
le tuyau intérieur (6) est composé d'un matériau synthétique thermodurcissable renforcé par des fibres, en particulier une résine époxy renforcée par des fibres de carbone réfractaire.

13. Procédé selon une quelconque des revendications 8 à 12, **caractérisé en ce que**
l'âme support (11) est composée de demi-coques (12-17), les demi-coques (12-17) étant composées d'un matériau synthétique, en particulier d'un matériau synthétique qui peut être facilement dissout chimiquement et/ou thermiquement.

14. Procédé selon une quelconque des revendications 8 à 12, **caractérisé en ce que**
l'âme support (11) est composée de demi-coques (12-17), les demi-coques (12-17) étant composées d'un matériau synthétique thermodurcissable renforcé par des fibres, en particulier une résine époxy renforcée par des fibres de carbone.

15. Procédé selon une quelconque des revendications 8 à 12, **caractérisé en ce que**
l'étape consistant à agencer l'âme support (11) sur le tuyau intérieur (6) consiste à agencer une pluralité de demi-coques d'âme support (12-17) autour du tuyau intérieur (6), les demi-coques ayant ensemble une géométrie correspondant à une géométrie du tuyau extérieur (4).

16. Procédé selon une quelconque des revendications 8 à 12, **caractérisé en ce que**
l'étape consistant à former le tuyau extérieur (4) sur l'âme support (11) consiste à envelopper et/ou durcir le matériau synthétique renforcé par des fibres autour de l'âme support (11).

17. Procédé selon une quelconque des revendications 8 à 16, comprenant en outre l'étape consistant à :
- enlever l'âme support (11) après la formation du tuyau extérieur (4) sur celle-ci, en particulier par une dissolution chimique et/ou thermique de l'âme support (11).
